# EUROPÄISCHE PATENTANMELDUNG

(11) **EP 3 769 890 A1**
(43) Veröffentlichungstag der Anmeldung: **27.01.2021**
(21) Anmeldenummer: 20184389.3
(22) Anmeldetag: 07.07.2020
(51) Int. Cl.: B23D 1/00, B23D 3/00, B26D 9/00, B23P 13/00, B23P 23/00, B23P 23/04, B23P 13/02, B21D 28/14, B23D 11/00, B23D 1/26, B23D 3/02, B23P 9/00

(54) **VERFAHREN ZUM SCHNEIDEN EINER NUTFÖRMIGEN AUSNEHMUNG IN EIN WERKSTÜCK**

(30) Priorität: 25.07.2019 DE 102019211066
(71) Anmelder: PASS Stanztechnik AG, 95473 Creußen (DE)
(72) Erfinder: Kraft, Stefan, 91289 Schnabelwaid (DE); Inzelsberger, Tobias, 91289 Schnabelwaid (DE)
(74) Vertreter: Rau, Schneck & Hübner Patentanwälte Rechtsanwälte PartGmbB

(57) **Zusammenfassung**

Bei einem Verfahren zum Schneiden einer nutförmigen Ausnehmung (40) in ein Werkstück (6) wird ein Schneidwerkzeug (4) für eine Werkzeugmaschine (1) an einem Werkstück (6) bereitgestellt. Das Schneidwerkzeug (4) wird in eine Schneidposition verlagert, in der das Schneidwerkzeug (4) in Eingriff mit dem Werkstück (6) steht. Das in Eingriff mit dem Werkstück (6) stehende Schneidwerkzeug (4) wird zum Schneiden der nutförmigen Ausnehmung (40) relativ zu dem Werkstück (6) verlagert. Beim Schneiden wird ein Span mit einer vorbestimmten, maximalen Spanlänge erzeugt, die geringer ist als eine Gesamtlänge (41) der zu erzeugenden Ausnehmung (40).

## Beschreibung

Die vorliegende Patentanmeldung nimmt die Priorität der deutschen Patentanmeldung DE 10 2019 211 066.5 in Anspruch, deren Inhalt durch Bezugnahme hierin aufgenommen wird.

Die Erfindung betrifft ein Verfahren zum Schneiden einer nutförmigen Ausnehmung in ein Werkstück.

Aus EP 3 127 628 A1 ist ein Verfahren bekannt bei dem ein beim Schneiden einer nutförmigen Ausnehmung erzeugter Span mittels eines Widerstandselements gebrochen wird, das in einem Spankanal eines Schneidwerkzeugs angeordnet ist. Die resultierende Spanlänge kann bei diesem Verfahren nicht genau bestimmt werden, denn sie hängt ab von Materialparametern, Prozessparametern sowie zufallsabhängigen Einflussgrößen. Es verbleibt ein Risiko dafür, dass Späne mit erhöhter Spanlänge den Spankanal verstopfen. Aufgrund resultierender Stillstandszeiten ist die Wirtschaftlichkeit des Verfahrens reduziert. Die US 5 113 728 A offenbart ein Verfahren zum spanenden Bearbeiten eines Werkstücks.

Es ist deshalb eine Aufgabe der Erfindung, ein Verfahren zum Schneiden einer nutförmigen Ausnehmung bereitzustellen, welches ein Verstopfen eines Spankanals zuverlässig verhindert und damit besonders wirtschaftlich ausgeführt werden kann.

Diese Aufgabe wird durch ein Verfahren mit den Merkmalen des Anspruchs 1 gelöst. Erfindungsgemäß wurde erkannt, dass das Verfahren zum Schneiden der nutförmigen Ausnehmung in das Werkstück, bei dem beim Schneiden ein Span mit einer vorbestimmten maximalen Spanlänge erzeugt wird, welche geringer ist als die Gesamtlänge der zu erzeugenden Ausnehmung, ein Verstopfen von Spankanälen zuverlässig verhindert, wodurch Stillstandszeiten reduziert werden können und womit das Verfahren besonders wirtschaftlich ausgeführt werden kann. Unter der Spanlänge wird die Länge der beim Schneiden der Ausnehmung resultierenden, insbesondere der über einen Spankanal aus dem Schneidwerkzeug abgeführten, Späne verstanden. Dadurch, dass die Späne mit der vorbestimmten maximalen Spanlänge erzeugt werden, können Späne mit einer größeren Spanlänge, welche zum Verstopfen des Spankanals führen könnte, verhindert werden. Insbesondere ist die vorbestimmte maximale Spanlänge unabhängig von Prozessparametern, insbesondere einer Schnittgeschwindigkeit und/oder einer Schnitttiefe und/oder einer Schnittbreite, und/oder von Materialeigenschaften des Werkstücks. Vorteilhaft wird hierdurch erreicht, dass die Spanlänge unabhängig von wechselnden, insbesondere nicht kontrollierbaren, Einflussgrößen vorbestimmt werden kann.

Unter der zu erzeugenden nutförmigen Ausnehmung wird eine unterbrechungsfreie, also zusammenhängende Ausnehmung in dem Werkstück verstanden.

Vorzugsweise ist die vorbestimmte, maximale Spanlänge einstellbar. Beispielsweise kann die vorbestimmte maximale Spanlänge in Abhängigkeit von Prozessparametern und/oder Materialparametern des Werkstücks eingestellt werden. Die vorbestimmte maximale Spanlänge kann beispielsweise anhand der Fördereigenschaften des Spans und/oder des Spankanals eingestellt werden. Das Schneiden der Ausnehmung kann somit besonders effizient erfolgen.

Unter dem Span mit der vorbestimmten maximalen Spanlänge wird ein Span verstanden, dessen Länge maximal so groß ist, insbesondere gleich groß ist oder geringer ist, wie die vorbestimmte Spanlänge.

Vorzugsweise wird der Span beim Schneiden mit genau der vorbestimmten Spanlänge, insbesondere einer vorbestimmten, festen, Spanlänge erzeugt. Eine resultierende Spanlänge kann von der vorbestimmten Spanlänge um maximal 50 %, insbesondere maximal 25 %, insbesondere maximal 10 %, insbesondere maximal 5 %, abweichen, insbesondere eine um diesen maximalen Prozentwert kürzere Spanlänge aufweisen. Der Spanabtransport kann somit nochmals zuverlässiger erfolgen.

Vorzugsweise ist das Schneidwerkzeug als Stoßwerkzeug, insbesondere gemäß vorbekannter Werkzeuge zum Ausführen von Hobelverfahren und/oder Stoßverfahren, ausgebildet. Das Schneidwerkzeug kann ein austauschbares Schneidmittel, insbesondere einen Stechstahl und/oder eine Stechplatte und/oder einen Hobelmeißel und/oder einen Stoßmeißel, umfassen, welches zum Schneiden der Ausnehmung in Eingriff mit dem Werkstück gelangt. Vorteilhaft wird hierdurch erreicht, dass die Wartung und Instandsetzung des Schneidwerkzeugs besonders einfach und effizient erfolgen kann.

Gemäß einem Aspekt der Erfindung umfasst das Schneidwerkzeug ein Werkzeugoberteil und ein Werkzeugunterteil. Das Werkstück kann zum Schneiden der Ausnehmung zwischen dem Werkzeugoberteil und dem Werkzeugunterteil angeordnet werden. Das Werkstück ist vorzugsweise ein Blech, insbesondere ein Metallblech. Vorzugsweise wird die Ausnehmung mittels des Werkzeugunterteils aus dem Werkstück geschnitten. Die erzeugten Späne können somit schwerkraftbedingt aus dem Schneidwerkzeug abgeführt werden.

Das Verlagern des in Eingriff mit dem Werkstück stehenden Schneidwerkzeugs relativ zu dem Werkstück erfolgt entlang eines Bearbeitungspfads. Der Bearbeitungspfad kann eben, insbesondere parallel zu der Werkstückoberfläche, ausgebildet sein. Insbesondere kann der Bearbeitungspfad gerade verlaufen. Die Gesamtlänge der zu erzeugenden Ausnehmung ist vorzugsweise durch die Länge des Bearbeitungspfads bestimmt.

Vorzugsweise wird das Schneidwerkzeug an der Werkzeugmaschine bereitgestellt. Das Schneidwerkzeug kann an der Werkzeugmaschine, insbesondere reversibel lösbar, befestigt sein. Das Verlagern des Schneidwerkzeugs, insbesondere in die Schneidposition und/oder relativ zu dem Werkstück, insbesondere zum Schneiden der nutförmigen Ausnehmung, erfolgt vorzugsweise mittels der Werkzeugmaschine. Die Werkzeugmaschine kann eine Positioniereinrichtung, insbesondere mit einem Positionierantrieb, insbesondere mit einem Positioniermotor, zum Verlagern des Schneidwerkzeugs aufweisen. Vorzugsweise ist das Schneidwerkzeug zum Verlagern in die Schneidposition und/oder relativ zu dem Werkstück an der Positioniereinrichtung angebracht. Die Werkzeugmaschine ist vorzugsweise eine Stanzvorrichtung zum Bearbeiten eines Werkstücks, insbesondere mit Stanzwerkzeugen.

Ein Verfahren nach Anspruch 2 gewährleistet das Erzeugen des Spans mit der vorbestimmten, insbesondere maximalen, Spanlänge in besonders zuverlässiger Weise. Dadurch, dass der Span unmittelbar an dem Werkstück abgeteilt wird, kann die Einflussnahme von Materialeigenschaften des Werkstücks und/oder von Verfahrensparametern auf die Spanlänge weitestgehend vermieden werden. Ein Verstopfen des Spankanals kann somit besonders zuverlässig verhindert werden. Unter dem Abteilen des Spans unmittelbar an dem Werkstück wird verstanden, dass das Abteilen in einem Abstand von einer Scherkante erfolgt, an welcher der Span von dem Werkstück abschert, welcher maximal 20 %, insbesondere maximal 10 %, insbesondere maximal 5 % der vorbestimmten Spanlänge entspricht.

Ein Verfahren nach Anspruch 3 ist besonders einfach, insbesondere mit herkömmlichen Schneidwerkzeugen und/oder Werkzeugmaschinen, umsetzbar und zuverlässig im Betrieb. Unter der Nutabschnittslänge wird eine Länge der Ausnehmung verstanden, welche geringer ist als die Gesamtlänge der zu erzeugenden Ausnehmung. Die vorbestimmte maximale Spanlänge, insbesondere die vorbestimmte Spanlänge, entspricht vorzugweise der Nutabschnittslänge. Das Verlagern des Schneidwerkzeugs relativ zu dem Werkstück, insbesondere über mindestens zwei der Nutabschnitte, kann diskontinuierlich erfolgen. Insbesondere kann das Schneidwerkzeug nach dem Schneiden des jeweiligen Nutabschnitts in einen bereits geschnittenen Bereich der zu erzeugenden Nut zurückverlagert werden. Unter einer kontinuierlichen Verlagerung des Schneidwerkzeugs relativ zu dem Werkstück wird verstanden, dass die Verlagerung, insbesondere parallel zu einer Oberfläche des Werkstücks und/oder zu einer Längserstreckung der Ausnehmung, umkehrbewegungsfrei, insbesondere geschwindigkeitskonstant, ist.

Ein Verfahren nach Anspruch 4 ist besondere flexibel anwendbar. Dadurch, dass das Schneidwerkzeug wiederholt zwischen der Schneidposition und der Rückstellposition verlagert wird, können Späne mit der vorbestimmten maximalen Spanlänge, insbesondere mit der vorbestimmten Spanlänge, erzeugt werden, wobei die Gesamtlänge der zu erzeugenden Ausnehmung einstellbar ist. Vorzugsweise wird die zu erzeugende Ausnehmung durch Erzeugung von mindestens 2, insbesondere mindestens 5, insbesondere mindestens 10, insbesondere mindestens 20, Nutabschnitten erzeugt. Die vorbestimmte maximale Spanlänge, insbesondere die vorbestimmte Spanlänge, kann somit bei gegebener Gesamtlänge der zu erzeugenden Ausnehmung beliebig klein eingestellt werden.

Ein Verfahren nach Anspruch 5 gewährleistet ein zeiteffizientes und maschinenschonendes Scheiden der nutförmigen Ausnehmung. Vorzugweise wird das Schneidwerkzeug über mindestens zwei, insbesondere mindestens drei, insbesondere mindestens fünf, benachbarte Nutabschnitte, insbesondere über die Gesamtlänge der zu erzeugenden Ausnehmung, kontinuierlich relativ zu dem Werkstück verlagert. Auf die Werkzeugmaschine wirkende Lasten aufgrund zu beschleunigender Massen können somit reduziert werden. Das Schneidwerkzeug kann entlang der mindestens zwei Nutabschnitte relativ zu dem Werkstück ohne eine Umkehrbewegung verlagert werden. Die kontinuierliche Verlagerung betrifft vorzugsweise eine parallel zu der Werkstückoberfläche orientierte Bewegungskomponente. Die kontinuierliche Verlagerung erfolgt vorzugsweise über das wiederholte Verlagern zwischen der Rückstellposition und der Schneidposition hinweg. Insbesondere kann das Werkzeugoberteil relativ zu dem Werkstück in einer Wellenbewegung verlagert werden, wobei die Wellentäler einen der Nutabschnittslänge und/oder der vorbestimmten maximalen Spanlänge, insbesondere der vorbestimmten Spanlänge, entsprechenden geraden Abschnitt aufweisen und wobei das Werkzeugunterteil im Bereich der Wellentäler in Eingriff mit dem Werkstück gelangt.

Ein Verfahren nach Anspruch 6 ist besonders zeiteffizient und maschinenschonend durchführbar. Unter den Unterbrechungen sind unvollständig bearbeitete, insbesondere unbearbeitete, Bereiche der zu erzeugenden Ausnehmung zu verstehen, welche sich zwischen zwei zu verbindenden fortgeschritten, insbesondere vollständig, bearbeiteten Nutabschnitten erstrecken. Die Unterbrechungen können in dem zweiten Bearbeitungsschritt oder in mindestens zwei, insbesondere in mindestens drei, insbesondere in mindestens fünf, weiteren Bearbeitungsschritten entfernt werden. Ein Bearbeitungsschritt ist dadurch bestimmt, dass das Schneidwerkzeug entlang von mindestens 80 % entlang der Gesamtlänge der zu erzeugenden Ausnehmung verlagert wird. Vorzugsweise wird das Schneidwerkezug in jedem der Bearbeitungsschritte relativ zu dem Werkstück vollständig entlang der Gesamtlänge verlagert. Dadurch, dass das Schneiden der Ausnehmung in mehreren Bearbeitungsschritten erfolgt, kann die vorbestimmte maximale Spanlänge, insbesondere die vorbestimmte Spanlänge, weitestgehend unabhängig von der parallel zur Werkstückoberfläche orientierten Verlagerungskomponente des Schneidwerkzeugs relativ zu dem Werkstück und damit besonders flexibel erzeugt werden.

Ein Verfahren nach Anspruch 7 ist im Betrieb besonders robust. Vorzugsweise erfolgt das Schneiden der Nutabschnitte in dem ersten Bearbeitungsschritt und in dem zweiten Bearbeitungsschritt werden die Unterbrechungen entfernt. Das Schneidwerkzeug kann über den gesamten zweiten Bearbeitungsschritt in der Schneidposition verbleiben. Dadurch, dass die Unterbrechungslänge im Wesentlichen der Nutabschnittslänge entspricht, ist die vorbestimmte maximale Spanlänge, insbesondere die vorbestimmte Spanlänge, der erzeugten Späne in dem ersten und in dem zweiten Bearbeitungsschritt im Wesentlichen identisch.

Der unvollständig bearbeitete Nutabschnitt kann einen Querschnitt aufweisen, der geringer ist als ein Querschnitt der zu erzeugenden Ausnehmung. Die Unterbrechung bezieht sich auf diesen Querschnitt der entlang der Längserstreckung der zu erzeugenden Ausnehmung bereits erzeugten, benachbarten und gegebenenfalls unvollständig bearbeiteten Nutabschnitte.

Ein Verfahren nach Anspruch 8 gewährleistet das Schneiden der Ausnehmung in besonders flexibler und präziser Weise. Dadurch, dass die Ausnehmung in den mindestens zwei Bearbeitungsschritten in das Werkstück geschnitten wird, ist der Materialabtrag pro Bearbeitungsschritt reduziert, wodurch eine erhöhte Präzision erzielt werden kann. Ferner können Ausnehmungen schrittweise in das Werkstück geschnitten werden, wodurch die Flexibilität des Verfahrens, insbesondere mit Hinblick auf besonders große zu erzeugende Querschnitte, erhöht ist. Ein Bearbeitungsschritt ist wiederum dadurch bestimmt, dass das Schneidwerkzeug entlang von mindestens 80 %, insbesondere vollständig, entlang der Gesamtlänge der zu erzeugenden Ausnehmung verlagert wird. Vorzugsweise wird der Querschnitt in mindestens drei, insbesondere mindestens fünf, insbesondere mindestens zehn, Bearbeitungsschritten erzeugt.

Gemäß einem besonders bevorzugten Aspekt der Erfindung wird das Erzeugen des Querschnitts der Ausnehmung in mehreren Bearbeitungsschritten kombiniert mit einer Erzeugung der Ausnehmung mit Unterbrechungen entlang ihrer Längserstreckung.

Ein Verfahren nach Anspruch 9 gewährleistet das Schneiden der Ausnehmung mit einer besonders großen Gesamtschnitttiefe, insbesondere in Bezug auf eine Werkstückdicke. Das Schneiden der Ausnehmung kann in mindestens drei, insbesondere in mindestens fünf, insbesondere in mindestens zehn, Bearbeitungsschritten mit jeweils zunehmender Teilschnitttiefe erfolgen.

Ein Verfahren nach Anspruch 10 gewährleistet ein besonders präzises Schneiden der Ausnehmung bei großem Querschnitt, insbesondere im Verhältnis zu den Werkstückabmessungen. Ferner wird das präzise Schneiden von Ausnehmungen in Werkstücke mit besonders hoher Steifigkeit zuverlässig gewährleistet. Vorzugsweise erfolgt das Schneiden der Ausnehmung in mehreren Bearbeitungsschritten, wobei in aufeinanderfolgenden Bearbeitungsschritten die Schnitttiefe stufenweise erhöht und/oder die Schnittposition in Querrichtung zu der zu erzeugenden Ausnehmung schrittweise verändert werden.

Gemäß einem Aspekt der Erfindung werden in einem Bearbeitungsschritt Nutabschnitte erzeugt, welche durch Unterbrechungen voneinander getrennt sind. In einem nachfolgenden Arbeitsschritt werden diese Unterbrechungen aus dem Werkstück geschnitten.

Alternativ können mehrere der Nutabschnitte, welche sich entlang der zu erzeugenden Nut über dieselbe Nutabschnittslänge und in unterschiedlichen Schnitttiefen und/oder Schnittbreiten erstrecken erzeugt, bevor die zwischen den Nutabschnitten verbleibenden Unterbrechungen in einem oder in mehreren der Bearbeitungsschritte aus dem Werkstück entfernt werden.

Ein Verfahren nach Anspruch 11 ist besonders effizient und robust durchführbar. Dadurch, dass das Schneidwerkzeug in jedem der Bearbeitungsschritte entlang der Gesamtlänge der zu erzeugenden Ausnehmung verlagert wird, können die zu beschleunigenden Massen reduziert werden und das Verlagern des Schneidwerkzeugs relativ zu dem Werkstück kann besonders zügig erfolgen.

Ein Verfahren nach Anspruch 12 ist besonders energieeffizient und robust. Das plastische Verformen erfolgt vorzugsweise lokal, insbesondere innerhalb des Querschnitts, der zu erzeugenden Ausnehmung. Im Bereich der plastischen Verformung kann das Werkstück verfestigt werden. Vorzugsweise führt dies zu einer lokalen Versprödung des Materials. Durch Einbringen der plastischen Vorverformung entstehen Sollbruchstellen entlang der Ausnehmung für den entstehenden Span. Beim Schneiden der Ausnehmung in das Werkstück wird der entstehende Span an den plastischen Vorverformungen abgeteilt. Ein Prägeabstand zwischen den plastischen Vorverformungen entspricht im Wesentlichen der vorbestimmten, insbesondere maximalen, Spanlänge. Parallel zu der Werkstückoberfläche erfolgt das Verlagern des Schneidwerkzeugs vorzugsweise kontinuierlich, insbesondere mit konstanter Geschwindigkeit, über die Gesamtlänge der zu erzeugenden Ausnehmung. Vorzugsweise verbleibt das Schneidwerkzeug über mindestens einen Bearbeitungsschritt in der Eingriffsposition. Das Schneiden der zu erzeugenden Ausnehmung kann in einem einzigen Bearbeitungsschritt erfolgen.

Ein Verfahren nach Anspruch 13 ist automatisiert durchführbar. Das Prägewerkzeug kann einen flächigen, linienförmigen oder punktförmigen Prägeeingriff aufweisen. Vorzugsweise ist das Prägewerkzeug als Körner, insbesondere mit einem punktförmigen, insbesondere kegelförmigen, Prägeeingriff ausgebildet. Das Prägewerkzeug und/oder das Schneidwerkzeug sind vorzugsweise dazu ausgebildet, in einen Maschinenrevolver der Werkzeugmaschine eingesetzt zu werden. Der Werkzeugwechsel kann damit automatisiert erfolgen.

Ein Verfahren nach Anspruch 14 ist im Einsatz besonders flexibel. Vorzugsweise wird zum Abkanten des Werkstücks an der nutförmigen Ausnehmung ein Abkantwerkzeug an der Werkzeugmaschinen bereitgestellt. Dadurch, dass das Abkanten des Werkstücks an der nutförmigen Ausnehmung erfolgt, sind die auf das Werkstück einwirkenden Beanspruchungen und die zum Verformen notwendigen Kräfte besonders gering. Vorzugsweise ist das Abkantwerkzeug dazu ausgebildet, in einen Maschinenrevolver der Werkzeugmaschine eingesetzt zu werden.

Ein Verfahren nach Anspruch 15 gewährleistet eine besonders effiziente Bearbeitung des Werkstücks. Dadurch, dass das Schneidwerkzeug an der Stanzvorrichtung bereitgestellt wird, wird der Einsatzbereich der Stanzvorrichtung vergrößert. Vorzugsweise sind das Schneidwerkzeug und/oder das Prägewerkzeug und/oder das Abkantwerkzeug und/oder mindestens ein Stanzwerkzeug an der Stanzvorrichtung, insbesondere an dem Maschinenrevolver, anordenbar.

Weitere Merkmale, Vorteile und Einzelheiten der Erfindung ergeben sich aus der nachfolgenden Beschreibung mehrerer Ausführungsbeispiele. Es zeigen:

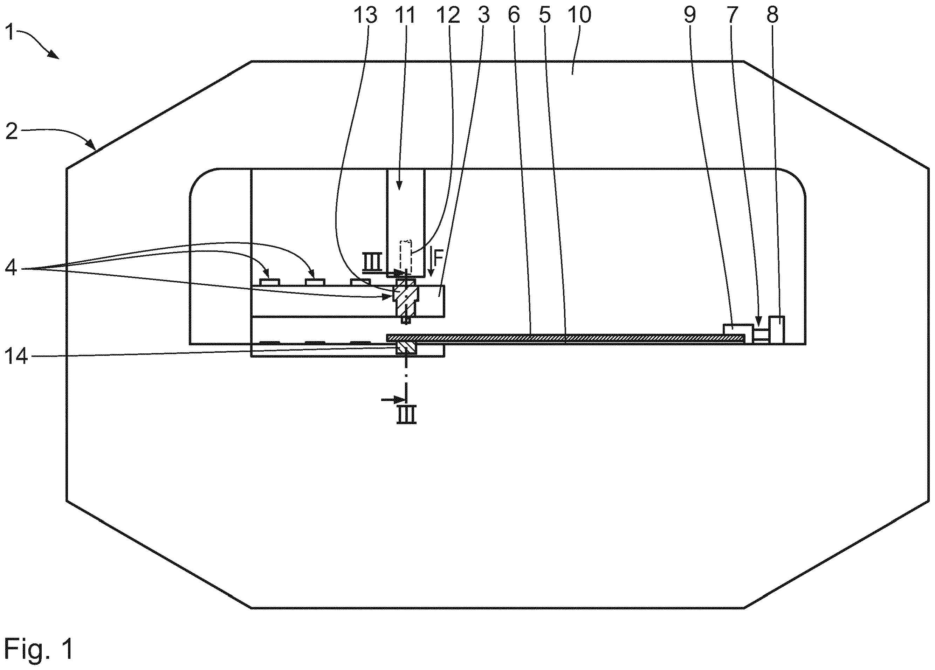

- Fig. 1: eine schematische Seitenansicht einer Werkzeugmaschine mit einem Schneidwerkzeug zum Schneiden einer nutförmigen Ausnehmung in ein Werkstück,

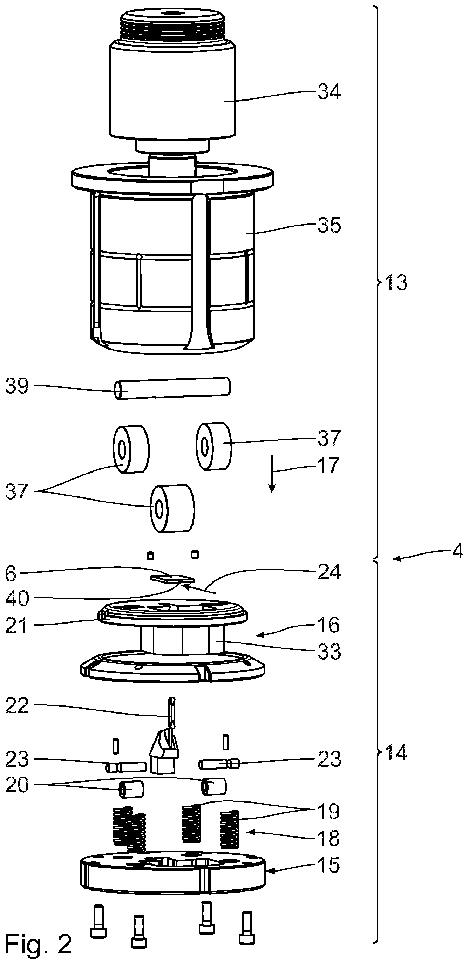

- Fig. 2: eine Explosionsdarstellung des Schneidwerkzeugs in Fig. 1 mit einem Werkzeugoberteil und einem Werkzeugunterteil, wobei das Werkzeugunterteil ein Schneidmittel zum Zusammenwirken mit dem Werkstück aufweist,

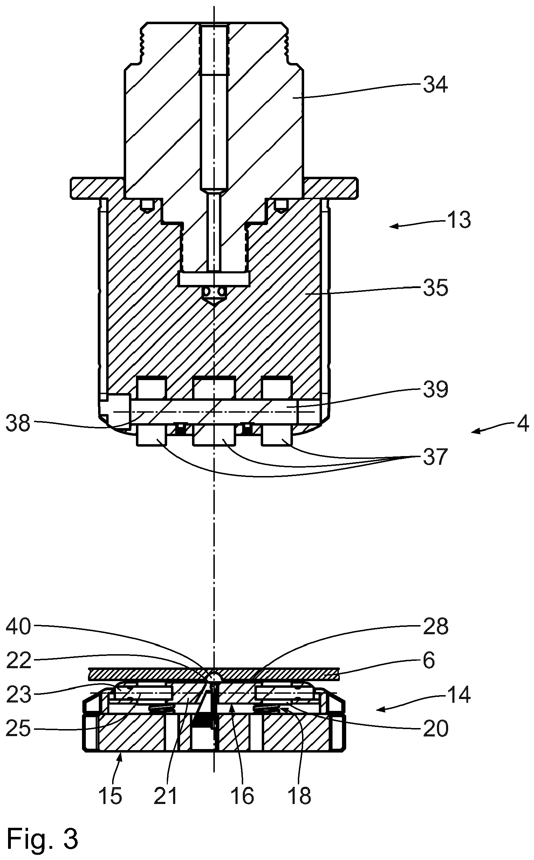

- Fig. 3: eine Schnittdarstellung des Schneidwerkzeugs entlang der Schnittlinie III-III in Fig. 1, wobei das Werkzeugunterteil des Schneidwerkzeugs einen Unterteil-Grundkörper und einen entlang einer Zustellrichtung verschiebbar daran gelagerten Unterteil-Abstreifer aufweist und wobei das Schneidwerkzeug in einer Rückstellposition angeordnet ist, in der das Schneidwerkzeug außer Eingriff mit dem Werkstück steht,

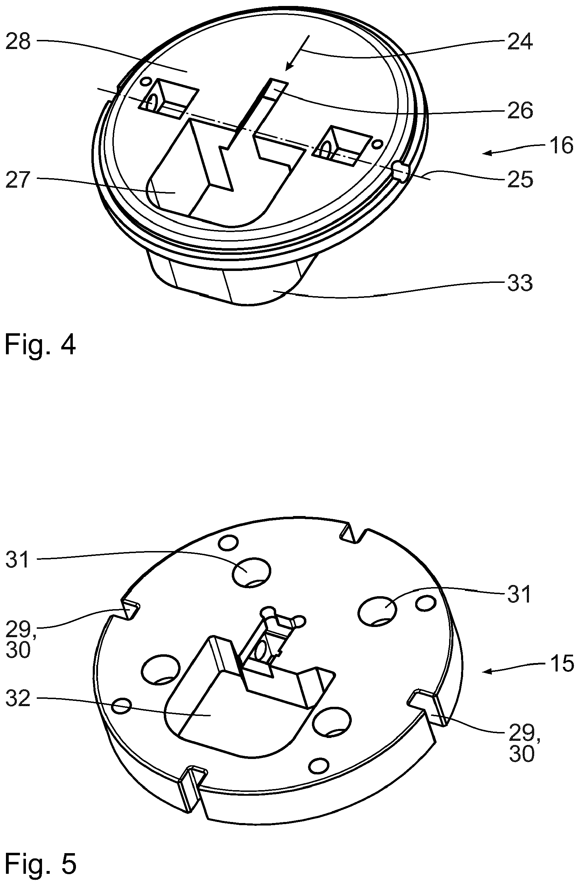

- Fig. 4: eine perspektivische Darstellung des Unterteil-Abstreifers in Fig. 3,
- Fig. 5: eine perspektivische Darstellung des Unterteil-Grundkörpers in Fig. 3,

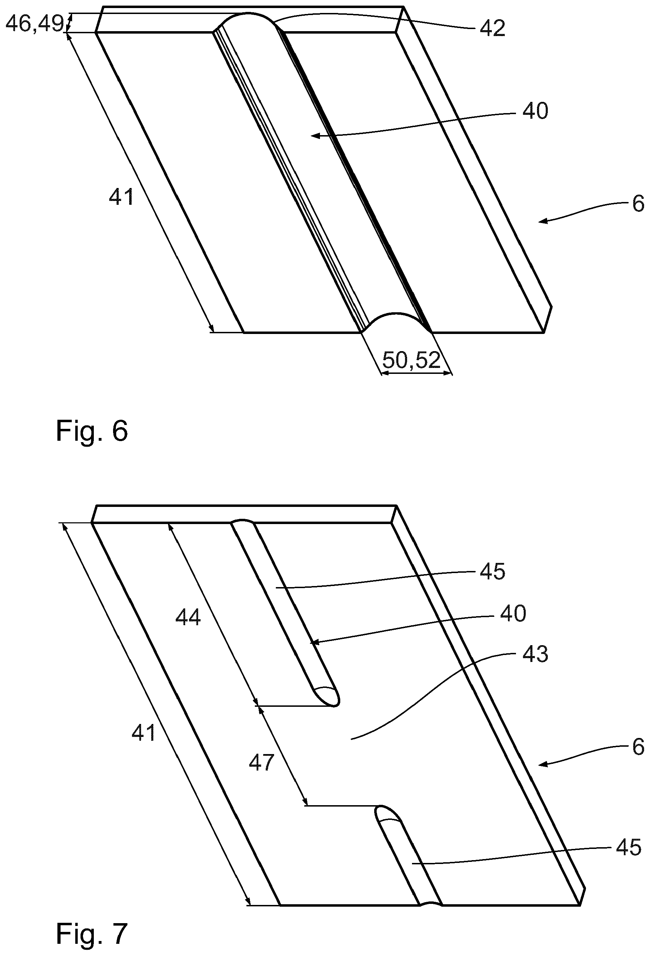

- Fig. 6: eine perspektivische Darstellung des Werkstücks in Fig. 1 mit der erzeugten nutförmigen Ausnehmung,
- Fig. 7: eine perspektivische Darstellung des Werkstücks in Fig. 1, wobei das Schneiden der Ausnehmung gemäß einem ersten Ausführungsbeispiel in zwei Bearbeitungsschritten erfolgt und wobei die Ausnehmung nach dem ersten Bearbeitungsschritt entlang ihrer Längserstreckung Unterbrechungen aufweist, die in dem zweiten Bearbeitungsschritt entfernt werden,

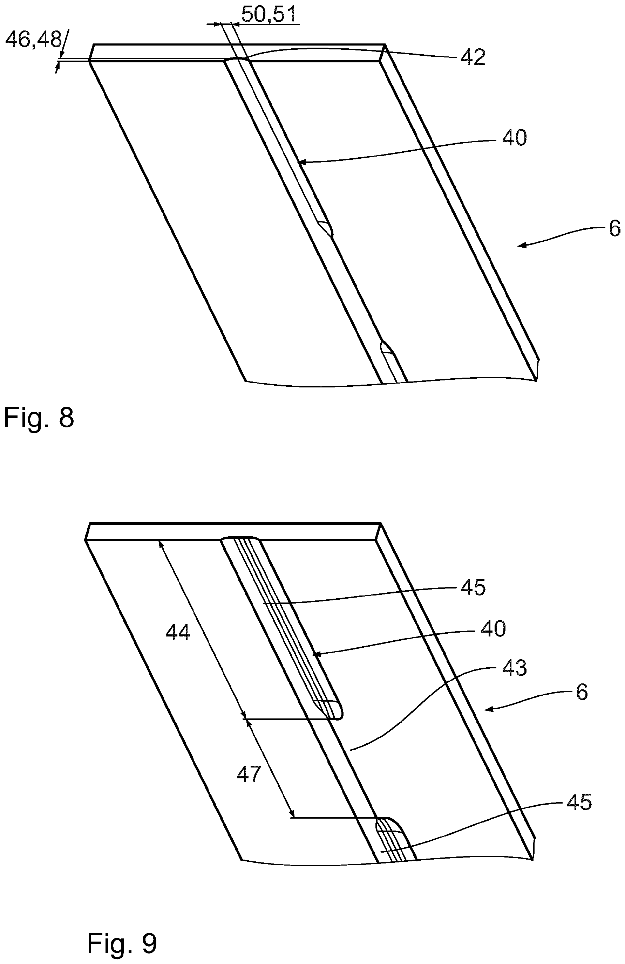

- Fig. 8: eine perspektivische Darstellung des Werkstücks ähnlich dem in Fig. 1, wobei das Schneiden der Ausnehmung gemäß einem weiteren Ausführungsbeispiel in mehreren Bearbeitungsschritten erfolgt und wobei ein Querschnitt der Ausnehmung nach dem ersten Bearbeitungsschritt unvollständig erzeugt und in einem nachfolgenden Bearbeitungsschritt vervollständigt wirkt,
- Fig. 9: eine perspektivische Darstellung des Werkstücks ähnlich dem in Fig. 1, wobei das Schneiden der Ausnehmung gemäß einem weiteren Ausführungsbeispiel in mehreren Bearbeitungsschritten erfolgt und wobei ein Querschnitt der Ausnehmung zumindest abschnittsweise in mehreren Bearbeitungsschritten erzeugt wird, wobei die Ausnehmung zumindest abschnittsweise Unterbrechungen entlang ihrer Längserstreckung aufweist,

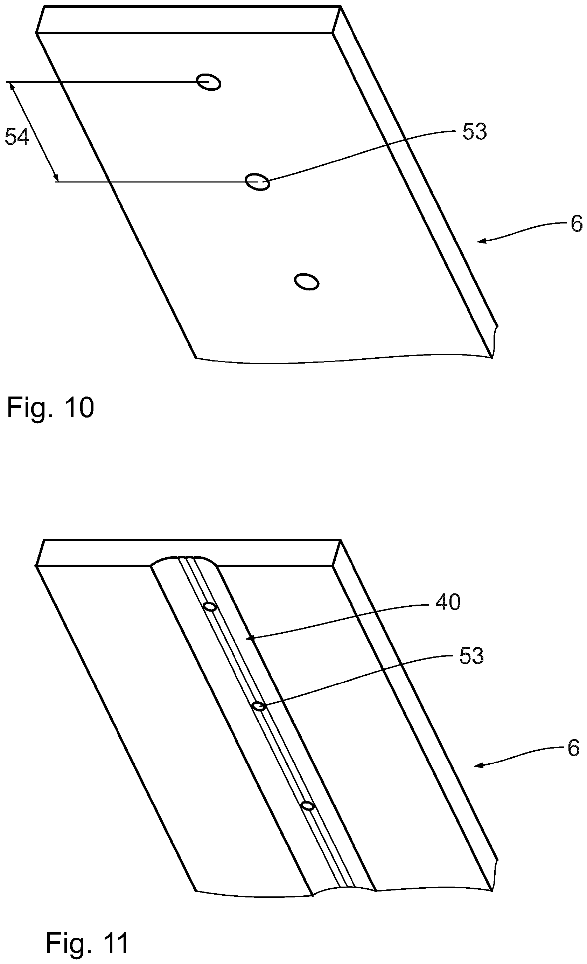

- Fig. 10: eine perspektivische Darstellung des Werkstücks in ähnlich dem Fig. 1, wobei das Schneiden der Ausnehmung gemäß einem weiteren Ausführungsbeispiel in mehreren Bearbeitungsschritten erfolgt, wobei das Werkstück vor dem Schneiden der Ausnehmung im Abstand der vorbestimmten Spanlänge plastisch verformt wird und wobei das Werkstück vor dem Schneiden der Ausnehmung und nach dem Einbringen der plastischen Verformung dargestellt ist und
- Fig. 11: eine perspektivische Darstellung des Werkstücks in Fig. 10, wobei mehrere Bearbeitungsschritte des Schneidens abgeschlossen sind, die Ausnehmung aber noch nicht vollständig erzeugt wurde und das Schneiden in einer Schnitttiefe erfolgt ist, welche geringer ist als die Gesamtschnitttiefe der zu erzeugenden Ausnehmung.

In der Fig. 1 ist eine Werkzeugmaschine 1 dargestellt mit einer Rahmenstruktur 2, einem damit verbundenen Maschinenrevolver 3 zum Aufnehmen von Bearbeitungswerkzeugen 4, einem Bearbeitungstisch 5 zum Tragen eines zu bearbeitenden Werkstücks 6 und einer Positioniereinrichtung 7 zum Verlagern des Werkstücks 6 relativ zu dem Bearbeitungstisch 5. Die Werkzeugmaschine 1 ist als Stanzvorrichtung ausgebildet. Das Werkstück 6 ist ein Blech, insbesondere ein Metallblech. Die Positioniereinrichtung 7 umfasst einen Positionierantrieb 8, welcher mit einem Spannmittel 9 in Verbindung steht. Das Werkstück 6 ist an dem Spannmittel 9 reversibel befestigt und mittels des Positionierantriebs 8 relativ zu dem Bearbeitungstisch 5 verlagerbar.

An einem Rahmenoberteil 10 der Rahmenstruktur 2 ist eine Betätigungseinrichtung 11 angeordnet. Die Betätigungseinrichtung 11 umfasst einen Stößel 12 zum Antreiben eines unterhalb des Stößels 12 angeordneten, aktiven Bearbeitungswerkzeugs 4. Der Stößel 12 ist zum Ausüben einer Anpresskraft F auf das aktive Bearbeitungswerkzeug 4 in vertikaler Richtung verlagerbar. Zum Übertragen einer Drehbewegung auf das aktive Bearbeitungswerkzeug 4 ist der Stößel 12 um eine vertikale Achse drehantreibbar. Hierdurch kann eine wechselnde Ausrichtung des Bearbeitungswerkzeugs 4 entlang unterschiedlicher Bearbeitungsrichtungen erfolgen. Gemäß einer alternativen Ausführung ist anstatt oder zusätzlich zu dem Stößel 12 eine Werkzeugaufnahme zum Verbinden des Bearbeitungswerkzeugs 4 mit der Werkzeugmaschine 1, insbesondere mit dem Maschinenrevolver 3 um die vertikale Achse drehantreibbar.

Der Maschinenrevolver 3 ist mit der Rahmenstruktur 2 drehantreibbar verbunden. Das aktive Bearbeitungswerkzeug 4 ist durch Drehantreiben des Maschinenrevolvers 3 aus mehreren der an dem Maschinenrevolver 3 angeordneten Bearbeitungswerkzeugen 4 auswählbar.

In der Fig. 2 ist das Schneidwerkzeug 4 weiter im Detail dargestellt. Das aktive Bearbeitungswerkzeug 4 ist als Schneidwerkzeug 4 ausgebildet. Das Schneidwerkzeug 4 umfasst ein Werkzeugoberteil 13 und ein Werkzeugunterteil 14. Das Werkzeugoberteil 13 ist in vertikaler Richtung oberhalb des Bearbeitungstischs 5, insbesondere oberhalb des Werkstücks 6, angeordnet. Das Werkzeugunterteil 14 ist an einer Unterseite des Bearbeitungstischs 5, unterhalb des Werkstücks 6, angeordnet.

Das Werkzeugunterteil 14 umfasst einen Unterteil-Grundkörper 15 und einen damit verbundenen Unterteil-Abstreifer 16.

Der Unterteil-Abstreifer 16 ist an dem Unterteil-Grundkörper 15 entlang einer Zustellrichtung 17 verschiebbar gelagert. Die Zustellrichtung 17 ist parallel zu der Vertikalrichtung orientiert. Zwischen dem Unterteil-Grundkörper 15 und dem Unterteil-Abstreifer 16 ist ein Vorspannmittel 18 angeordnet, welches den Unterteil-Abstreifer 16 in Richtung des Werkzeugoberteils 13 vorspannt. Das Vorspannmittel 18 umfasst hierzu vier als Druckfedern ausgebildete Spiralfedern 19.

In der Fig. 3 ist das Schneidwerkzeug 4 entlang einer Längsachse geschnitten und im zusammengebauten Zustand dargestellt. Der Unterteil-Abstreifer 16 umfasst zwei Unterteil-Rollenkörper 20, welche drehbar an einem Abstreifergrundkörper 21 gelagert sind.

Der Unterteil-Abstreifer 16 ist zwischen einer Schneidposition und einer Rückstellposition verlagerbar. Das Vorspannmittel 18 spannt den Unterteil-Abstreifer in die Rückstellposition vor. In der Rückstellposition ist der Unterteil-Abstreifer 16 relativ zu dem Unterteil-Grundkörper 15 in Richtung des Werkzeug oberteils 13 verlagert.

An dem Unterteil-Grundkörper 15 ist ein Schneidmittel 22 angebracht. Das Schneidmittel 22 überragt den Unterteil-Abstreifer 16 in der Schneidposition in Richtung des Werkzeugoberteils 13 nach oben. In der Rückstellposition überragt der Unterteil-Abstreifer 16 das Schneidmittel 22 nach oben.

In der Fig. 4 ist der Unterteil-Abstreifer 16 weiter im Detail dargestellt. Zum drehbeweglichen Lagern der Unterteil-Rollenkörper 20 umfasst der Unterteil-Abstreifer 16 jeweils ein Unterteil-Rollenlager 23. Die Unterteil-Rollenkörper 20 sind um eine horizontale, senkrecht zu einer Vorschubrichtung 24 orientierte Unterteil-Drehachse 25 drehbar gelagert.

Der Unterteil-Abstreifer 16 umfasst eine Schneidmittelaussparung 26 durch die hindurch sich das Schneidmittel 22 in der Schneidposition erstreckt. Ein Spankanal 27 des Unterteil-Abstreifers 16 ist zum Abführen von Spänen ausgebildet, die beim Bearbeiten des Werkstücks 6 entstehen. Ferner hat der Unterteil-Abstreifer 16 eine parallel zu einer Oberfläche des Bearbeitungstischs 5 ausgebildete Werkstückauflage 28 zum Führen des Werkstücks 6 entlang der Horizontalrichtung.

In der Fig. 5 ist der Unterteil-Grundkörper 15 weiter im Detail dargestellt. Zum Drehantreiben des Werkzeugunterteils 14 um die Zustellrichtung 17 umfasst der Unterteil-Grundkörper 15 ein Eingriffsmittel 29. Das Eingriffsmittel 29 weist vier nutförmige Eingriffskerben 30 auf. Die Spiralfedern 19 sind in je einer Aufnahmebohrung 31 des Unterteil-Grundkörpers 15 angeordnet. Der Unterteil-Grundkörper 15 weist eine Spankanal-Aussparung 32 zum Abführen der bei der Werkstückbearbeitung entstehenden Späne auf. Der Spankanal 27 durchdringt die Spankanal-Aussparung 32.

Mittels eines den Spankanal 27 bildenden Bunds 33 ist der Unterteil-Abstreifer 16 mit dem Unterteil-Grundkörper 15 um die Zustellrichtung 17 drehfest verbunden.

Das Werkzeugoberteil 13 umfasst eine Kopfeinheit 34 und eine Anpresseinheit 35. Die Kopfeinheit 34 ist zum Zusammenwirken mit dem Stößel 12 ausgebildet.

Das Werkzeugoberteil 13 umfasst drei Oberteil-Rollenkörper 37, welche an einem Oberteil-Rollenlager 39 der Anpresseinheit 35 um eine Oberteil-Drehachse 38 drehbar gelagert sind.

Die Funktionsweise der Werkzeugmaschine 1 und des Schneidwerkzeugs 4 ist wie folgt:
Das Werkstück 6 ist auf dem Bearbeitungstisch 5 angeordnet und mit dem Spannmittel 9 verbunden. Das Schneidwerkzeug 4 befindet sich unterhalb des Stößels 12 der Betätigungseinrichtung 11.

Mittels des Positionierantriebs 8 wird das Werkstück 6 zwischen das Werkzeugoberteil 13 und das Werkzeugunterteil 14 verlagert. Insbesondere ist das Werkstück 6 in einer Position angeordnet, in der sich das Schneidmittel 22 unterhalb und in horizontaler Richtung um 0,1 mm bis 10 mm beabstandet von einer zu erzeugenden nutförmigen Ausnehmung 40 befindet. Das Schneidwerkzeug 4 befindet sich in einer Rückstellposition, in der es außer Eingriff mit dem Werkstück 6 steht.

Mittels des Stößels 12 wird das Schneidwerkzeug 4 vertikal in Richtung des Werkstücks 6 verlagert. Die Oberteil-Rollenkörper 37 gelangen in Kontakt mit dem Werkstück 6. Der Unterteil-Abstreifer 16 wird aufgrund der über die Oberteil-Rollenkörper 37 auf das Werkstück 6 übertragenen Anpresskraft entgegen der Wirkung des Vorspannmittels 18 in Zustellrichtung 17 nach unten verlagert. Das Werkstück 6 wird hierdurch in Richtung des Schneidmittels 22 bewegt. Das Schneidmittel ist in horizontaler Richtung weiterhin beabstandet zu dem Werkstück 6 angeordnet. Entlang einer Schneidrichtung überlappt das Schneidmittel 22 das Werkstück 6.

Zum Schneiden der nutförmigen Ausnehmung 40 wird das Schneidwerkzeug mittels des Positionierantriebs 8 relativ zu dem Werkstück 6 verlagert. Das Schneidmittel 22 gelangt in Eingriff mit dem Werkstück 6. Das Schneidwerkzeug befindet sich in der Schneidposition.

Anhand der Fig. 6 und Fig. 7 ist eine erste Ausführungsform des Bearbeitungsverfahrens beschrieben. Die zu erzeugende Ausnehmung 40 erstreckt sich entlang einer Gesamtlänge 41. Ein Querschnitt 42 der Ausnehmung 40 ist im Wesentlichen parabelförmig.

Das Schneiden der Ausnehmung 40 erfolgt in zwei Bearbeitungsschritten. In einem ersten Bearbeitungsschritt wird das Schneidwerkzeug 4 ausgehend von einem Randbereich des Werkstücks 6 über die Gesamtlänge 41 der zu erzeugenden Ausnehmung 40 bewegt. Dabei wird das Schneidwerkzeug 4 wiederholt zwischen der Schneidposition und der Rückstellposition verlagert. Insbesondere wird das Schneidwerkzeug 4 während der beiden Arbeitsschritte kontinuierlich, insbesondere mit konstanter Horizontalgeschwindigkeit, relativ zu dem Werkstück 6 verlagert.

Beim Schneiden der Ausnehmung 40 in das Werkstück 6 entsteht ein nicht dargestellter Span. Das Verlagern des Schneidwerkzeugs 4 führt zum Unterbrechen der Spanerzeugung und zum Abteilen des Spans von dem Werkstück 6. Der Span wird unmittelbar an dem Werkstück 6, insbesondere an seiner Scherkante, abgeteilt.

In der Rückstellposition wird das Schneidwerkzeug 4 relativ zu dem Werkstück 6 verlagert, ohne dass ein weiteres Schneiden der Ausnehmung 40 erfolgt. Die zu erzeugende Ausnehmung 40 weist in denjenigen Bereichen, in welchen das Schneidwerkzeug 4 in dem ersten Bearbeitungsschritt in der Rückstellposition angeordnet war, Unterbrechungen 43 auf.

Der beim Schneiden erzeugte Span weist eine vorbestimmte, maximale Spanlänge auf, welche im Wesentlichen einer Nutabschnittslänge 44 der im ersten Bearbeitungsschritt erzeugten Nutabschnitte 45 entspricht.

In dem zweiten Bearbeitungsschritt wird das Schneidwerkzeug 4 wiederum relativ zu der Ausnehmung 40 über die Gesamtlänge 41 verlagert. Das Schneidwerkzeug 4 verbleibt in der Eingriffsposition. Eine Schnitttiefe 46 in dem zweiten Bearbeitungsschritt entspricht einer Schnitttiefe 46 in dem ersten Bearbeitungsschritt. Die Spanbildung erfolgt demnach ausschließlich im Bereich der Unterbrechungen 43. Die vorbestimmte maximale Spanlänge ist im Wesentlichen identisch mit einer Unterbrechungslänge 47 zwischen den im ersten Bearbeitungsschritt erzeugten Nutabschnitten 45.

Die mit der vorbestimmten, maximalen Spanlänge erzeugten Späne werden schwerkraftbedingt über den Spankanal 27 aus dem Schneidwerkzeug 4 nach unten abgeführt. Dadurch, dass der Spankanal 27 die Spankanalausnehmung 32 durchdringt, kann ein Anhaften der Späne in einem Übergangsbereich zwischen dem Unterteil-Grundkörper 15 und dem Unterteil-Abstreifer 16 zuverlässig verhindert werden.

Vorzugsweise ist die nutförmige Ausnehmung 40 als Abkantnut ausgebildet. Zum Abkanten des Werkstücks 6 wird ein nicht dargestelltes Abkantwerkzeug, insbesondere an der Werkzeugmaschine 1, bereitgestellt. Mittels des Abkantwerkzeugs wird das Werkstück 6 durch Biegung um eine durch eine Haupterstreckung der Ausnehmung 40 bestimmte Biegeachse umgeformt. Das Abkanten des Werkstücks 6 kann an der nutförmigen Ausnehmung 40 besonders präzise erfolgen. Insbesondere kann die Materialbeanspruchung aufgrund der im Bereich der Ausnehmung 40 verringerten Wandstärke reduziert werden. Ein geringerer Biegeradius kann erzielt werden.

Anhand der Fig. 8 ist ein weiteres Ausführungsbeispiel des Schneidverfahrens beschrieben. Im Unterschied zu dem vorstehend beschriebenen Ausführungsbeispiel erfolgt das Schneiden der Ausnehmung 40 in mehr als zwei Bearbeitungsschritten. Insbesondere wird der Querschnitt 42 nach dem ersten Bearbeitungsschritt unvollständig erzeugt. Der Querschnitt 42 wird schrittweise vergrößert.

Hierzu wir das Schneidwerkzeug 4 in die Eingriffsposition verlagert, wobei eine Schnitttiefe 46 in dem ersten Bearbeitungsschritt einer Teilschnitttiefe 48 entspricht, welche geringer ist als eine Gesamtschnitttiefe 49 der zu erzeugenden Ausnehmung 40. Ferner entspricht eine Schnittbreite 50 einer Teilschnittbreite 51, welche geringer ist als eine Gesamtschnittbreite 52. Entsprechend dem vorstehend beschriebenen Ausführungsbeispiel wird das Schneidwerkzeug 4 in jedem Bearbeitungsschritt über die Gesamtlänge 41 der zu erzeugenden Ausnehmung 40 bewegt. In einem ersten Bearbeitungsschritt wird das Bearbeitungswerkzeug 4 dabei wiederholt zwischen der Eingriffsposition und der Rückstellposition verlagert. Die resultierende Spanlänge entspricht dabei im Wesentlichen der Nutabschnittslänge 44 der erzeugten Nutabschnitte 45. In einem darauffolgenden Bearbeitungsschritt wird das Schneidwerkzeug 4, in derselben Teilschnitttiefe 48 und in der Eingriffsposition verbleibenden, entlang der zu erzeugenden Ausnehmung verlagert.

Vor dem nachfolgenden Bearbeitungsschritt wird das Schneidwerkzeug 4 in Breitenrichtung der zu erzeugenden Ausnehmung 40 versetzt. Die beiden vorstehend beschriebenen Bearbeitungsschritte werden mit dem in Breitenrichtung relativ zu dem Werkstück 6 versetzten Schneidwerkzeug 4 ausgeführt. Der Querschnitt 42 wird hierdurch in Breitenrichtung erweitert.

Die vorstehend beschriebenen Bearbeitungsschritte werden wiederholt ausgeführt, bis die Breite des erzeugten Querschnitts 42 auf Höhe der Teilschnitttiefe 48 einer Sollbreite entspricht.

Anschließend wird das Schneidwerkzeug weiter in Richtung des Werkstücks 6 zugestellt. Das Schneidmittel 22 gelangt in einer größeren Teilschnitttiefe 48 in Eingriff mit dem Werkstück 6. Die vorstehend beschriebenen Bearbeitungsschritte werden wiederholt ausgeführt. Das Schneidwerkzeug 4 wird solange schrittweise in Richtung des Werkstücks 4 zugestellt, bis die Gesamtschnitttiefe 49 erreicht und der zu erzielende Querschnitt 42 vollständig über die Gesamtlänge 41 erzeugt ist.

Anhand der Fig. 9 ist ein weiteres Ausführungsbeispiel des erfindungsgemäßen Bearbeitungsverfahrens beschrieben. Im Unterschied zu den vorstehend erläuterten Ausführungsbeispielen wird der Querschnitt 42 in mehreren aufeinanderfolgenden Bearbeitungsschritten entlang der Schnitttiefe 46 und/oder der Schnittbreite 50 schrittweise entlang von Nutabschnitten 45 vergrößert, deren Nutabschnittslängen 44 geringer sind als die Gesamtlänge 41 der zu erzeugenden Ausnehmung 40. In mehreren aufeinander folgenden Bearbeitungsschritten werden dann die Unterbrechungen 43 entfernt.

Vorzugsweise wird in mehreren Bearbeitungsschritten auf jeweils einer Teilschnitttiefe 48 über die Nutabschnittslänge 44 der zu erzielende Querschnitt über die Gesamtschnittbreite 52 erzeugt. Anschließend werden in dieser Teilschnitttiefe 48 die verbliebenen Unterbrechungen 43 über die Gesamtlänge 41 aus dem Werkstück 6 geschnitten.

Anhand der Fig. 10 und Fig. 11 ist ein weiteres Ausführungsbeispiel des erfindungsgemäßen Bearbeitungsverfahrens beschrieben. Im Unterschied zu den vorstehend erläuterten Ausführungsbeispielen wird das Werkstück 6 zum Erzeugen des Spans mit der vorbestimmten maximalen Spanlänge entlang der zu erzeugenden Ausnehmung 40 im Abstand der vorbestimmten Spanlänge plastisch vorverformt. Vor dem Schneiden der Ausnehmung 40 wird ein nicht dargestelltes Prägewerkzeug an der Werkzeugmaschine 1 bereitgestellt. Das Prägewerkzeug ist vorzugsweise ein Körner. Mittels des Prägewerkzeugs werden entlang der Ausnehmung 40 Prägungen 53, insbesondere Körnungen, in das Werkstück 6 eingebracht. Im Bereich der Prägungen 53 ist das Werkstück 6 verfestigt und weist eine verringerte Zähigkeit auf.

Anschließend wird das Schneidwerkzeug 4 an der Werkzeugmaschine 1 bereitgestellt. Das Schneidwerkzeug 4 wird in der Eingriffsposition angeordnet. Das Schneidwerkzeug 4 wird in einem oder in mehreren Bearbeitungsschritten jeweils über die Gesamtlänge 41 der zu erzeugenden Ausnehmung 40 relativ zu dem Werkstück 6 verlagert, wobei das Schneidwerkzeug 4 in der Eingriffsposition verbleibt. Aufgrund der Vorverformung, insbesondere der reduzierten Zähigkeit des Werkstücks 6 im Bereich der Prägungen 53, werden die erzeugten Späne bei der vorbestimmten, maximalen Spanlänge von dem Werkstück 6 abgeteilt, welche einem Prägeabstand 54 zwischen zwei benachbarten Prägungen 53 entspricht.

Der Querschnitt 42 der zu erzeugenden Ausnehmung 40 kann in einem einzigen Bearbeitungsschritt, oder entsprechend den vorstehend beschriebenen Ausführungsbeispielen in mehreren Bearbeitungsschritten erfolgen, wobei die Schnitttiefe 46 und/oder die Schnittbreite 50 schrittweise erhöht werden.

Dadurch, dass beim Schneiden der nutförmigen Ausnehmung 40 der Span mit der vorbestimmten maximalen Spanlänge erzeugt wird, welche geringer ist als die Gesamtlänge 41 der nutförmigen Ausnehmung 40, kann der Abtransport der Späne aus dem Schneidwerkzeug 4 besonders zuverlässig erfolgen. Insbesondere kann verhindert werden, dass spanabführende Kanäle, insbesondere der Spankanal 27, verstopfen. Stillstandszeiten der Werkzeugmaschine 1 können somit zuverlässig verhindert werden und die Bearbeitung von Werkstücken 6 kann somit besonders effizient und wirtschaftlich erfolgen.

## Patentansprüche

1. Verfahren zum Schneiden einer nutförmigen Ausnehmung in ein Werkstück, umfassend die Schritte:
- Bereitstellen eines Schneidwerkzeugs (4) für eine Werkzeugmaschine (1) an dem Werkstück (6),
- Verlagern des Schneidwerkzeugs (4) in eine Schneidposition, in der das Schneidwerkzeug (4) in Eingriff mit dem Werkstück (6) steht, und
- Verlagern des in Eingriff mit dem Werkstück (6) stehenden Schneidwerkzeugs (4) relativ zu dem Werkstück (6) zum Schneiden der nutförmigen Ausnehmung (40),
**dadurch gekennzeichnet, dass**
beim Schneiden ein Span mit einer vorbestimmten, maximalen Spanlänge erzeugt wird, welche geringer ist als eine Gesamtlänge (41) der zu erzeugenden Ausnehmung (40).

2. Verfahren nach Anspruch 1, **dadurch gekennzeichnet, dass** die vorbestimmte maximale Spanlänge erzielt wird durch Abteilen des Spans unmittelbar an dem Werkstück (6).

3. Verfahren nach Anspruch 1 oder 2, **dadurch gekennzeichnet, dass** die vorbestimmte maximale Spanlänge erzielt wird durch Verlagern des Schneidwerkzeugs (4) nach dem Schneiden einer vorbestimmten Nutabschnittslänge (44) in eine Rückstellposition, in der das Schneidwerkzeug (4) außer Eingriff mit dem Werkstück (6) steht.

4. Verfahren nach einem der vorstehenden Ansprüche, **dadurch gekennzeichnet, dass** das Schneidwerkzeug (4) beim Schneiden der Ausnehmung (40) wiederholt verlagert wird zwischen der Schneidposition und der Rückstellposition.

5. Verfahren nach einem der vorstehenden Ansprüche, **dadurch gekennzeichnet, dass** das Schneidwerkzeugs (4) relativ zu dem Werkstück über mindestens 50 % der Gesamtlänge der Ausnehmung (40) verlagert wird, ohne dass eine Rückverlagerung entlang zu der zu erzeugenden Ausnehmung (40) erfolgt.

6. Verfahren nach einem der vorstehenden Ansprüche, **dadurch gekennzeichnet, dass** das Schneiden der Ausnehmung (40) in mindestens zwei Bearbeitungsschritten erfolgt, wobei die zu erzeugende Ausnehmung (40) nach dem ersten Bearbeitungsschritt entlang ihrer Längserstreckung Unterbrechungen (43) aufweist, welche in einem nachfolgenden Bearbeitungsschritt entfernt werden.

7. Verfahren nach Anspruch 6, **dadurch gekennzeichnet, dass** eine Unterbrechungslänge (47) im Wesentlichen einer Nutabschnittslänge (44) unmittelbar benachbarter, bereits erzeugter Nutabschnitte (45) entspricht.

8. Verfahren nach einem der vorstehenden Ansprüche, **dadurch gekennzeichnet, dass** das Schneiden der Ausnehmung (40) in mindestens zwei Bearbeitungsschritten erfolgt, wobei ein Querschnitt (42) der Ausnehmung (40) nach dem ersten Bearbeitungsschritt zumindest abschnittsweise unvollständig erzeugt wird und in einem nachfolgenden Bearbeitungsschritt vervollständigt wird.

9. Verfahren nach Anspruch 8, **dadurch gekennzeichnet, dass** das Schneiden in dem ersten Bearbeitungsschritt in einer Teilschnitttiefe (48) erfolgt, welche geringer ist als die Gesamtschnitttiefe (49) der zu erzeugenden Ausnehmung (40).

10. Verfahren nach Anspruch 8 oder 9, **dadurch gekennzeichnet, dass** das Schneiden in dem ersten Bearbeitungsschritt auf einer Teilschnittbreite (51) erfolgt, welche geringer ist als eine Gesamtschnittbreite (52) der zu erzeugenden Ausnehmung (40).

11. Verfahren nach einem der vorstehenden Ansprüche, **dadurch gekennzeichnet, dass** das Schneiden in mindestens zwei Bearbeitungsschritten erfolgt, wobei das Schneidwerkzeug (4) in jedem der Bearbeitungsschritte entlang einer Gesamtlänge (41) der zu erzeugenden Ausnehmung (40) verlagert wird.

12. Verfahren nach einem der vorstehenden Ansprüche, **dadurch gekennzeichnet, dass** das Werkstück (6) vor dem Schneiden im Bereich der zu erzeugenden Ausnehmung (40) in einem der vorbestimmten Spanlänge entsprechenden Prägeabstand (54) plastisch vorverformt wird.

13. Verfahren nach Anspruch 12, **dadurch gekennzeichnet, dass** zum plastischen Verformen des Werkstücks (6) ein Prägewerkzeug an der Werkzeugmaschine (1) bereitgestellt wird.

14. Verfahren nach einem der vorstehenden Ansprüche, **gekennzeichnet durch** Abkanten des Werkstücks (6) an der nutförmigen Ausnehmung (40).

15. Verfahren nach einem der vorstehenden Ansprüche, **dadurch gekennzeichnet, dass** das Schneidwerkzeug (4) an einer Stanzvorrichtung (1) bereitgestellt wird.
